# EUROPEAN PATENT APPLICATION

(11) **EP 3 045 244 A1**
(43) Date of publication of application: **20.07.2016**
(21) Application number: 14843414.5
(22) Date of filing: 12.09.2014
(51) Int. Cl.: B23B 31/117, B23B 41/00, B23B 41/12, B23B 51/08, B23B 51/10

(54) **CUTTING TOOL**

(30) Priority: 13.09.2013 JP 2013190963
(71) Applicant: Mitsubishi Materials Corporation, Chiyoda-ku Tokyo 100-8117 (JP)
(72) Inventor: KANABOSHI Akira, Joso-shi Ibaraki 300-2795 (JP); KUMAKIRI Takayuki, Joso-shi Ibaraki 300-2795 (JP)
(74) Representative: Hoffmann Eitle
(86) International application number: PCT/JP2014/074176
(87) International publication number: WO 2015/037697

(57) **Abstract**

A cutting tool (1) of the present invention includes: a tool main body (2) which is capable of being rotated around an axial line (O) of the tool main body (2); a tube-shaped portion (7) formed on a distal end portion of the tool main body so as to extend in a direction of the axial line (O); a hole machining tool core (3) which has a shaft shape, which is detachably fitted to an inside of the tube-shaped portion (7), and which extends so as to protrude from the tube-shaped portion (7) ahead of a distal end thereof; and a head portion (9) which has a tube shape, which is fitted to an outside of the tube-shaped portion (7), and in which a cutting edge is provided on an outer circumferential portion of the head portion (9). A circumferential wall of the tube-shaped portion (9) includes an outer wall portion (19), an inner wall portion (20), and a fluid chamber (18) which is formed in the circumferential wall between the outer and inner wall portions (19) and (20), a fluid being filled in the fluid chamber. While increasing a pressure of the fluid in the fluid chamber (18), the outer wall portion (19) is elastically deformed outward in a radial direction of the circumferential wall and thereby being pressed to the head portion (9), and the inner wall portion (20) is elastically deformed inward in the radial direction of the circumferential wall and thereby being pressed to the hole machining tool core (3).

## Description

### Technical Field

The present invention relates to a cutting tool which forms a machined hole by cutting an inner wall surface of a prepared hole provided on a work material, for example, in advance, and coaxially cuts an opening portion peripheral edge of the machined hole with respect to the machined hole.

Priority is claimed on Japanese Patent Application No. 2013-190963, filed September 13,2013, the content of which is incorporated herein by reference.

### Background Art

In the related art, a cutting tool is known, which performs hole machining of a work material by a reamer (hole machining tool core) protruding in a direction of an axial line of a tool main body, and cuts an opening portion of the machined hole of the work material by a cutting edge provided on an outer circumference of a distal end portion of the tool main body. In a so-called valve finisher which is an example of the cutting tool, finishing of a stem guide hole and machining of a valve seat in a cylinder head of a four-cycle engine are coaxially performed by the same cutting process.

For example, Patent Document 1 below discloses a cutting tool which includes a tool main body which is capable of being rotated around an axial line and in which a mounting hole is formed in a distal end portion of the tool main body in an axial direction, a reamer which has a shaft shape, is detachably fitted to the inside of the mounting hole, and extends so as to protrude forward from the distal end portion of the tool main body, and a plurality of cutting edges which are circumferentially provided on the outer circumference of the distal end portion of the tool main body with intervals therebetween. Moreover, a collet chuck capable of holding the reamer is provided on the proximal end portion of the tool main body with respect to the mounting hole, and the collet chuck can be made to hold or release the reamer due to operation of a working tool to be inserted from the proximal end portion of the tool main body in a state where the tool main body is removed from a main shaft of the machine tool.

In cutting using the cutting tool, in order to accurately form the machined tool and the opening portion, it is necessary to fix the reamer to the tool main body in a state where the axial line of the tool main body and the center axis of the reamer accurately coincide with each other (that is, are coaxial with each other). That is, in the cutting tool, axial alignment of the reamer, that is, adjustment which causes the axial line of the tool main body and the axial line of the reamer to coincide with each other should be performed with high accuracy.

Accordingly, in Patent Document 1, three adjustment screw holes, which extend in a radial direction and in which the inner portions in the radial direction of a hole communicate with the mounting hole, are circumferentially provided on the distal end portion of the tool main body with equal intervals therebetween, the outer circumferential surface of the reamer in the mounting hole is pressed in three directions different from each other inward in the radial direction by a screw distal surface (pressing surface) of an adjustment screw by screwing adjustment screws (adjustment means) to each of the adjustment screw holes, and the axial alignment of the reamer can be performed.

Meanwhile, for example, Patent Document 2 below discloses a hydro-chuck in which a fluid chamber is provided inside a chuck tube of a chuck main body, a thin portion is formed on an inner circumferential surface of a tube hole of the chuck tube, a fluid is sealed into the fluid pressure chamber, and an object to be held which is fitted to the tube hole of the chuck tube is held by increasing the pressure inside the fluid pressure chamber and expanding the thin portion.

In a case where the hydro-chuck is used in the cutting tool, preferably, it is possible to increase the accuracy of the axial alignment of the reamer, and it is possible to easily perform attachment and detachment of the reamer.

### Citation List

### Patent Documents

Patent Document 1: Japanese Unexamined Patent Application, First Publication No. 2008-49434
Patent Document 2: Japanese Unexamined Patent Application, First Publication No. 2012-76199

### Summary of Invention

### Technical Problem

However, in a case where the hydro-chuck structure is simply used in the cutting tool such as the above-described valve finisher, the outside in the radial direction of the chuck tube is thinned, and it is not possible to secure tool rigidity.

Specifically, in recent years, a decrease in the diameter of a valve seat of a work material has been required, and it is difficult to secure a sufficient thickness on the outside in the radial direction of the chuck tube.

The present invention is made in consideration of the above-described circumstances, and an object thereof is to provide a cutting tool capable of detachably mounting a hole machining tool core on a tool main body using a hydro-chuck structure, and sufficiently securing tool rigidity while increasing attachment and detachment operability and accuracy in axial alignment.

### Solution to Problem

In order to solve the problems and achieve the object, the present invention suggests the following means. That is, according to an aspect of a cutting tool of the present invention, there is provided a cutting tool, including:
a tool main body which is capable of being rotated around an axial line of the tool main body;
a tube-shaped portion formed on a distal end portion of the tool main body so as to extend in a direction of the axial line;
a hole machining tool core which has a shaft shape, which is detachably fitted to an inside of the tube-shaped portion, and which extends so as to protrude from the tube-shaped portion ahead of a distal end thereof; and
a head portion which has a tube shape, which is fitted to an outside of the tube-shaped portion, and in which a cutting edge is provided on an outer circumferential portion of the head portion, wherein
a circumferential wall of the tube-shaped portion includes: an outer wall portion;
an inner wall portion; and a fluid chamber which is formed in the circumferential wall between the outer wall portion and the inner wall portion, a fluid being filled in the fluid chamber, and wherein
while increasing a pressure of the fluid in the fluid chamber, the outer wall portion is elastically deformed outward in a radial direction of the circumferential wall and thereby being pressed to the head portion, and the inner wall portion is elastically deformed inward in the radial direction of the circumferential wall and thereby being pressed to the hole machining tool core.

According to the aspect of the cutting tool of the present invention, the tube-shaped portion is provided on the distal end portion of the tool main body, and by increasing the pressure of liquid (fluid) filled inside the fluid chamber formed in the circumferential wall of the tube-shaped portion in the state where the hole machining tool core is fitted to the inside of the tube-shaped portion and the head portion is fitted to the outside the tube-shaped portion, the inner wall portion of the circumferential wall positioned inside the fluid chamber formed in the circumferential wall and the outer wall portion of the circumferential wall positioned outside the fluid chamber of the circumferential wall are elastically deformed in the radial direction of the circumferential wall, and thereby the tube-shaped portion, the hole machining tool core, and the head portion are fixed to each other while being coaxially aligned with each other on the axial line of the tool main body.

Specifically, if a liquid pressure (pressure of the fluid) inside the fluid chamber of the circumferential wall of the tube-shaped portion is increased, the inner wall portion of the circumferential wall of the tube-shaped portion positioned inside the fluid chamber formed in the circumferential wall is deformed so as to be expanded inward in the radial direction of the circumferential wall, and the inner circumferential surface of the inner wall portion is pressed to the outer circumferential surface of the hole machining tool core. Accordingly, the hole machining tool core is adjusted such that the center axis of the hole machining tool core is accurately coincident with the axial line of the tool main body.

Moreover, the outer wall portion of the circumferential wall of the tube-shaped portion positioned outside the fluid chamber formed in the circumferential wall is deformed so as to be expanded outward the tube-shaped portion, and the outer circumferential surface of the outer wall portion is pressed to the inner circumferential surface of the head portion. Accordingly, in a case of a division type of separation in which the head portion and the tool main body are separated from each other (that is, the head portion and the tool main body are movable relatively to each other), the head portion is adjusted such that the center axis of the head portion is accurately coincident with the axial line of the tool main body.

In this way, since the tube-shaped portion, the hole machining tool core, and the head portion are pressed to each other in the radial direction and fitted so as to come into close contact with each other, the distal end portion of the tool main body is firmly fixed as if the tube-shaped portion, the hole machining tool core, and the head portion are integrated with each other. Accordingly, even when an external force such as a cutting load is applied to the tool during cutting, sufficient tool rigidity is secured.

Specifically, unlike the present invention, for example, in a configuration (a hydro-chuck structure of the related art) in which only the inner wall portion positioned inside in the radial direction of the circumferential wall of the tube-shaped portion can be elastically deformed inward in the radial direction, there is a concern that the tube-shaped portion may be deformed (the diameter thereof may be increased) outward in the radial direction by a reaction force by which the inner wall portion presses the hole machining tool core, or a holding force with respect to the hole machining tool core may not be sufficiently secured.

According to the aspect of the present invention, the inner wall portion positioned inside in the radial direction of the circumferential wall of the tube-shaped portion is elastically deformed inward in the radial direction, the outer wall portion positioned outside in the radial direction of the circumferential wall is elastically deformed outward in the radial direction, the hole machining tool core and the head portion are pressed to each other, and effects in which the reaction forces cancel out each other are obtained. Accordingly, it is possible to effectively prevent the deformation of the tube-shaped portion, and it is possible to sufficiently secure tool rigidity by securing the holding force with respect to the hole machining tool core.

That is, in the aspect of the present invention, expansion and deformation of the tube-shaped portion outward in the radial direction is preformed, which is not performed in the hydro-chuck structure of the related art. Accordingly, a gap between the tube-shaped portion and the head portion disposed outside in the radial direction of the tube-shaped portion is eliminated, and it is possible to obtain a reliable fastening state with high rigidity as if the distal end portion of the tool main body is integrated.

In addition, since the axial alignment and the fixation among the tube-shaped portion, the hole machining tool core, and the head portion are performed by a simple operation such as increasing the pressure of the fluid in the fluid chamber, workability is improved. That is, for example, in the related art, when the hole machining tool core or the head portion is attached to the tube-shaped portion of the tool main body, an adjustment screw for fixing the position of the hole machining tool core or the head portion while aligning the hole machining tool core or the head portion in the axial direction, or the like is necessary. However, in the present invention, the adjustment screw is not required, and workability with respect to the axial alignment and the fixation of the reamer is remarkably improved.

According to the aspect of the present invention, setting of the cutting tool is effectively performed in a short time, man-hours decrease, the workability increases, cutting is performed with high efficiency, and productivity is improved.

In addition, the hole machining tool core and the head portion may be removed from the tube-shaped portion of the tool main body by decreasing the pressure of the fluid filled inside the fluid chamber. Accordingly, the inner wall portion and the outer wall portion which have been elastically deformed as described above are deformed so as to be restored, and it is possible to simply remove the hole machining tool core and the head portion from the tube-shaped portion.

Moreover, in the aspect of the present invention, according to the simple configuration in which the tube-shaped portion is provided on the distal end portion of the tool main body, and the hole machining tool core is fitted to the inside of the tube-shaped portion and the head portion is fitted to the outside of the tube-shaped portion, the above-described excellent effects are obtained.

Hereinbefore, according to the aspect of the present invention, the hole machining tool core is detachably mounted on the tool main body using the hydro-chuck structure, and it is possible to sufficiently secure the tool rigidity while increasing the attachment and detachment operability and accuracy of the axial alignment.

In addition, according to the aspect of the present invention, it is possible to cope with any kind of work.

In addition, in the aspect of the cutting tool of the present invention, the head portion may be detachably mounted on a distal end portion of the tool main body.

Note that, the tool main body and the head portion can be divided into separate units while the rigidity of the distal end portion of the tool main body is sufficiently secured, and thereby the following effects are obtained. That is, for example, a plurality of head portions in which the shapes of the cutting edges or diameters of rotation paths of the cutting edges around the axial line are different from each other can be prepared, and according to the shapes of the opening portions (shapes of the valve seats, diameters of the valve seats, or the like) of various machined holes, or a kind of machining (rough machining, finishing, or the like), the head portion can be selectively exchanged with respect to one set of the tool main body (and the hole machining tool core). Accordingly, it is possible to easily cope with small quantities of various different types of production while decreasing cost of facilities, and when the head portion or the cutting edge is damaged, it is possible to cope with the damage by replacing the head portion, and it is possible to reduce costs.

Moreover, in the aspect of the cutting tool of the present invention, the fluid chamber may include an annular fluid chamber portion which is formed in the tube-shaped portion so as to be annularly arranged in a circumferential direction of the tube-shaped portion.

Note that, operations due to the provision of the above-described fluid chamber are obtained over the entire region in the circumferential direction on the inside and the outside in the radial direction of the tube-shaped portion, and the tube-shaped portion and the hole machining tool core, and the tube-shaped portion and the head portion are fixed so as to firmly and reliably come into close contact with each other over the entire region in the circumferential direction.

Moreover, in the aspect of the cutting tool of the present invention, a plurality of the annular fluid chamber portions may be formed in the tube-shaped portion so as to be positioned at intervals each other in the direction of the axial line.

Note that, the above-described effects obtained by provision of the annular fluid chamber portions to the fluid chamber are obtained at a plurality of locations with intervals therebetween in the axial direction in the tube-shaped portion, and preferably, reliability increases.

In addition, in the aspect of the cutting tool of the present invention, the inner wall portion may be detachably fitted inside the outer wall portion, a seal groove may be formed in the inner wall portion so as to be close to a distal end of the inner wall portion with respect to the fluid chamber, and a seal member may be disposed inside the seal groove.

Note that, even when the outer wall portion is elastically deformed outward in the radial direction and the inner wall portion is elastically deformed inward in the radial direction, since the seal member is disposed so as to be close to a distal end of the inner wall portion with respect to the fluid chamber, it is possible to prevent the fluid, which fills the fluid chamber, from leaking to the outside.

### Advantageous Effects of Invention

According to an aspect of a cutting tool of the present invention, a hole machining tool core is detachably mounted on a tool main body using a hydro-chuck structure, and it is possible to sufficiently secure tool rigidity while increasing an attachment and detachment operability and accuracy of axial alignment.

### Brief Description of Drawings

FIG. 1 is an exploded perspective view of a cutting tool according to an embodiment of the present invention.
FIG. 2 is a side view of the cutting tool of FIG. 1.
FIG. 3 is a side view showing a tool main body of the cutting tool of FIG. 1 in which a main portion (tube-shaped portion) is shown in a partial cross-section.
FIG. 4 is a longitudinal sectional view in which the tube-shaped portion of FIG. 3 is enlarged.

### Description of Embodiments

Hereinafter, a cutting tool 1 according to an embodiment of the present invention will be described with reference to the drawings.

The cutting tool 1 of the present embodiment is used to perform hole machining of a work material using a reamer (hole machining tool core) 3 protruding in a direction of an axial line O of the tool main body 2, and to cut an opening portion of the machined hole of the work material using a plurality of cutting edges 4 which are provided on an outer circumference of a distal portion of a head portion 9. In a so-called valve finisher which is an example of the cutting tool, finishing of a stem guide hole and machining of a valve seat in a cylinder head of a four-cycle engine are coaxially performed by the same cutting process.

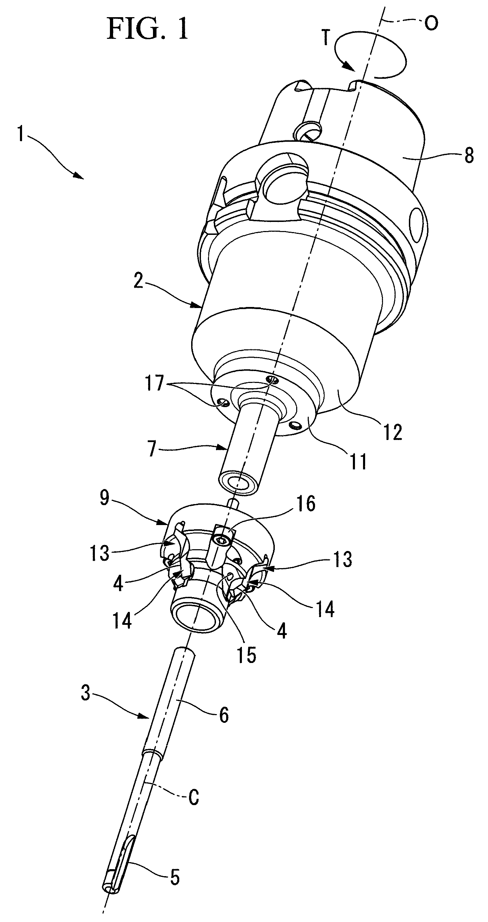

As shown in FIGS. 1 to 4, the cutting tool 1 includes the reamer 3 which is a shaft-shaped hole machining tool core protruding in a direction of a center axis C, the tool main body 2 which is capable of being rotated around the axial line O, and the head portion 9 which has a tube shape and is detachably fitted to the distal end portion of the tool main body 2 and in which the plurality of the cutting edges 4 are provided on the circumferential portion of the head portion 9.

The reamer 3 is formed of a hard material such as sintered hard alloy and has an elongated columnar shape extending in a direction of the center axis C. A cutting edge portion 5 is formed on the distal end portion of the reamer 3, and a shank portion 6 is formed on the proximal side of the reamer with respect to the cutting edge portion 5. In the shown example, an outer diameter of the shank portion 6 is larger than an outer diameter of the cutting edge portion 5. The reamer 5 is used to cut an inner wall portion surface of a prepared hole provided in the work material in advance using the cutting edge portion 5 so as to form a machined hole having a predetermined inner diameter.

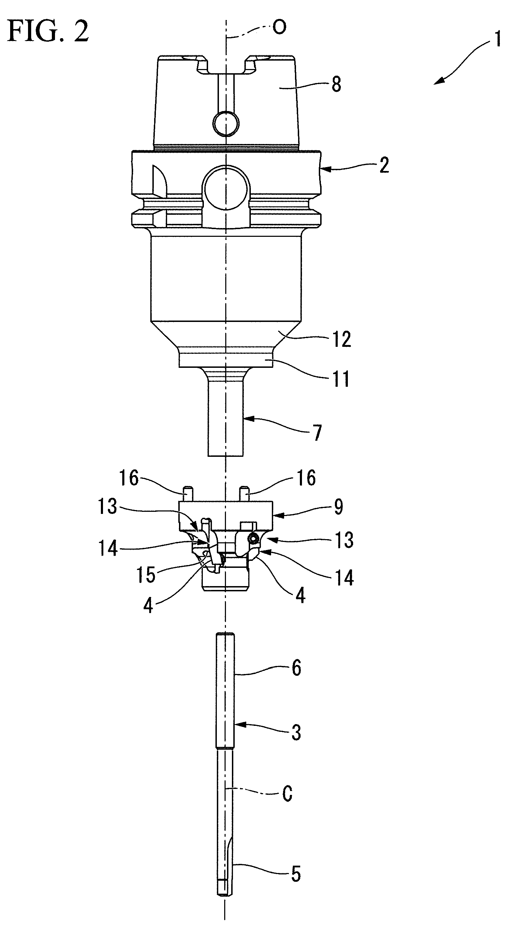

The tool main body 2 is formed of steel or the like and is formed in a multi-step columnar shape extending in a direction of the axial line O. In the shown example, the tool main body 2 has the largest diameter at the center portion in the direction of the axial line O. In addition, a tube-shaped portion 7 having the smallest outer diameter in the tool main body 2 is provided on the distal end portion (the lower sides in FIGS. 1 and 2) of the tool main body 2, and the tube-shaped portion 7 is formed coaxially with the axial line O and extends in the direction of the axial line O. A detailed configuration of the tube-shaped portion 7 will be described below.

An attachment portion 8 for attaching the tool main body 2 to a main spindle of a machine tool such as a machining center (not shown) is provided on the proximal end portion (the upper sides in FIGS. 1 and 2) of the tool main body 2 in the direction of the axial line O. The proximal end portion (attachment portion 8) of the tool main body 2 is attached to the main spindle of the machine tool, and the cutting tool 1 is fed in the direction of the axial line O while being rotated around the axial line O in a tool rotation direction T so as to cut the work material.

Here, in the present specification, the tube-shaped portion 7 side of the tool main body 2 in the direction of the axial line O is referred to as a distal side, and the attachment portion 8 side in the direction of the axial line O is referred to as a proximal side. In addition, a direction orthogonal to the axial line O is referred to a radial direction, and a direction revolving around the direction of the axial line O is referred to as a circumferential direction. In addition, in the circumferential direction, the direction in which the tool main body 2 is rotated during cutting is referred to as the front side in the tool rotation direction T (or simply referred to as tool rotation direction T), and a direction opposite to the front side in the tool rotation direction T is referred to as the rear side in the tool rotation direction T.

Although it is not particularly shown, a coolant supply hole is formed inside the tool main body 2, and a distal end portion of the coolant supply hole opens to the distal surface of the head attachment portion 11 of the tool main body 2. As shown in FIGS. 1 and 2, the head attachment portion 11 is formed of a portion which is connected to the proximal side of the tube-shaped portion 7 in the tool main body 2, and has a larger diameter than that of the tube-shaped portion 7. In the shown example, the outer diameter of the head attachment portion 11 is the same as the outer diameter of the proximal end proximal end portion (maximum diameter portion) of the head portion 9. Moreover, a taper portion 12 in which the diameter gradually increases toward the proximal side is formed on the portion connected to the proximal side of the head attachment portion 11 in the tool main body 2.

The diameter of the outer circumference surface of the head portion 9 gradually decreases from the proximal end portion of the head portion toward the distal end portion thereof such that the proximal end portion has the largest diameter. In the outer circumferential surface of the head portion 9, a plurality of notch portions 13, which are recessed so as to open outward in the radial direction and the distal side of the tool main body 2, are formed on an intermediate portion positioned between the distal portion and the proximal end portion of the head portion 9 with intervals in the circumferential direction, and an insert attachment seat, on which a cutting insert 14 having the cutting edge 4 is detachably mounted, is provided on each of the portions positioned the rear sides in the tool rotation direction T in the notch portions 13.

In the present embodiment, one to three notch portions 13 and one to three insert attachment seats are formed with intervals therebetween in the circumferential direction of the head portion 9, and angles between the cutting edges 4 of the cutting inserts 14 mounted on the insert attachment seats and the axial line O are set so as to be different from each other.

The cutting insert 14 is formed of a hard material such as sintered hard alloy, and is fixed to the insert attachment seat by screwing a clamp screw provided on the front side in the tool rotation direction T of the insert attachment seat in the head portion 9.

Although it is not particularly shown, a pressing screw for adjusting the position of the cutting insert 14, which is mounted on the insert attachment seat, in the direction of the axial line O is provided on a portion positioned on the proximal side of the insert attachment seat in the head portion 9 (a portion corresponding to the insert attachment seat in the circumferential direction in the proximal end portion of the head portion 9). The pressing screw is screwed to a female screw hole (not shown) which opens to the end surface facing the proximal side (proximal surface) in the head portion 9 and extends in the direction of the axial line O, and is accommodated in the female screw hole.

In addition, a guide pad which is formed of a hard material such as sintered hard alloy may be disposed between the insert attachment seats adjacent to each other in the circumferential direction. Moreover, in this case, in a longitudinal sectional view in the direction of the axial line O, an angle between a direction in which the distal end of the outer circumferential surface of the guide pad extends and the axial line O is the same as an angle between a direction in which the cutting edge 4 of the cutting insert 14 mounted on the insert attachment seat positioned on the front side in the tool rotation direction T of the guide pad extends and the axial line O.

In addition, in the outer circumferential surface of the head portion 9, a coolant ejection hole 15 which communicates with the coolant supply hole of the tool main body 2 opens to the portion positioned on the front side in the tool rotation direction T of the insert attachment seat. The coolant ejection hole 15 is open so as to supply a coolant (cutting oil) to the cutting edge 4 of the cutting insert 14 mounted on the insert attachment seat positioned on the rear side in the tool rotation direction T of the coolant ejection hole 15 and the cutting edge portion 5 of the reamer 3.

Moreover, a through hole penetrating the proximal end portion of the head portion 9 in the direction of the axial line O is formed between the notch portions 13 adjacent to each other in the circumferential direction, and an attachment screw 16 which attaches the head portion 9 to the tool main body 2 is inserted into the through hole.
The attachment screw 16 is screwed to an attachment screw hole 17 which opens to the distal surface of the head attachment portion 11 of the tool main body 2 and extends to the proximal side. Accordingly, the head portion 9 is detachably mounted on the tool main body 2.

In addition, instead of mounting the head portion 9 on the tool main body 2 using the attachment screw 16, a configuration may be adopted in which a male screw portion is provided on the outer circumferential surface of the head attachment portion 11, a male screw portion is provided on the outer circumferential surface of the head attachment portion 11, a recessed portion recessed from the proximal surface of the head portion 9 toward the distal side thereof is formed, a female screw portion is provided on the inner circumferential surface of the recessed portion, and the head portion 9 is detachably mounted on the tool main body 2 by screwing the male screw portion and the female screw portion.

Moreover, the inner circumferential surface of the head portion 9 has a constant diameter (inner diameter) in the direction of the axial line O except for the proximal end portion (a portion corresponding to a tapered connection portion 19a between the tube-shaped portion 7 described below and the head attachment portion 11) in the direction of the axial line O. The inner diameter of the head portion 9 is approximately the same as the outer diameter of the tube-shaped portion 7, and the head portion 9 is fitted to the tube-shaped portion 7 in a removable manner by allowing the inner circumferential surface of the head portion 9 to slide on the outer circumferential surface of the tube-shaped portion 7 so as to be fitted toward the proximal side.

In this way, the head portion 9 is detachably fitted to the outside in the radial direction of the tube-shaped portion 7.

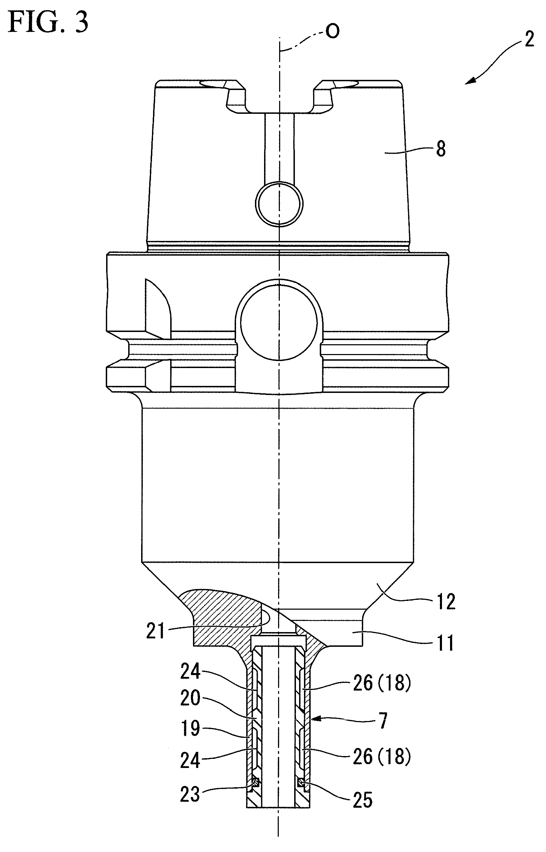

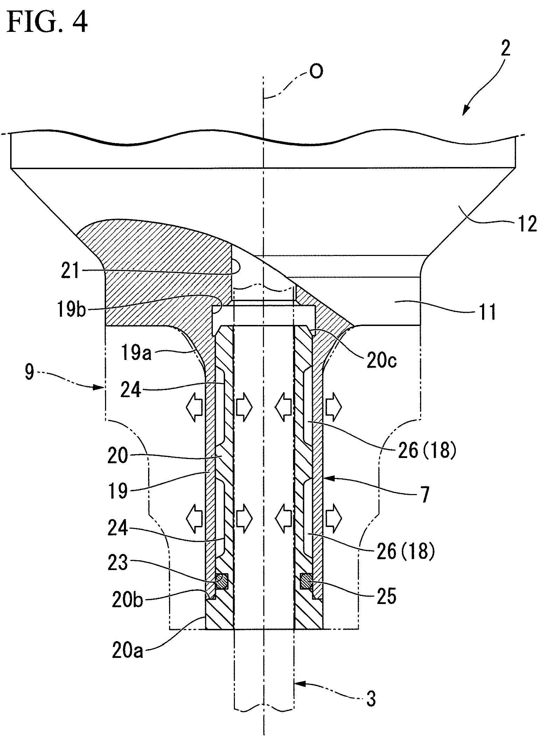

In addition, as shown in FIGS. 3 and 4, fluid chambers 18 which are filled with liquid (fluid) such as oil are provided in the inner portions of the circumferential wall of the tube-shaped portion 7. Specifically, the circumferential wall of the tube-shaped portion 7 includes an outer tube (an outer wall portion positioned on the outside in the radial direction of the fluid chamber 18 in the circumferential wall) 19 which is integrally formed with the tool main body 2, and an inner tube (an inner wall portion positioned on the inside in the radial direction of the fluid chamber 18 in the circumferential wall) 20 which is liquid-tightly fitted into the outer tube 19, and the fluid chambers 18 are formed between the outer tube 19 and the inner tube 20.

In the circumferential wall of the tube-shaped portion 7, the outer tube 19 is erected from the distal surface of the head attachment portion 11 of the tool main body 2 toward the distal side. The proximal end portion (connection portion) 19a which is connected to the head attachment portion 11 on the outer circumferential surface of the outer tube 19 is formed in a taper shape in which the diameter gradually increases toward the proximal side. In addition, a portion on the outer circumferential surface of the outer tube 19 except for the proximal end portion 19a has a constant diameter (outer diameter) in the direction of the axial line O.

In addition, the inner diameter of a proximal end portion 19b of the inner circumferential surface of the outer tube 19 is larger than the inner diameter of the portion except for the proximal end portion 19b, and the portion except for the proximal end portion 19b has a constant diameter (inner diameter) in the direction of the axial line O.

Moreover, a mounting hole 21 which extends in the direction of the axial line O in the tool main body 2 and in which the mounting hole 21 opens toward the inner portion of the outer tube 19 is formed on the proximal side of the outer tube 19 in the tool main body 2, and the inner portion of the outer tube 19 and the inner portion of the mounting hole 21 communicate with each other. In the shown example, the inner diameter of the mounting hole 21 is smaller than the inner diameter of the outer tube 19, and is slightly larger than the inner diameter of the inner tube 20 which is fitted to the outer tube 19. Moreover, the shank portion 6 of the reamer 3 may be inserted into the mounting hole 21.

In the circumferential wall of the tube-shaped portion 7, the inner tube 20 is detachably fitted into the outer tube 19. Specifically, an outer diameter of a distal portion 20a of the inner tube 20 is larger than that of a portion except for the distal portion 20a, and the portion of the inner tube 20 except for the distal portion 20a is inserted into the outer tube 19.

The outer diameter of the distal portion 20a of the inner tube 20 is slightly smaller than the outer diameter of the portion except for the proximal end portion 19a of the outer tube 19, and the distal portion 20a on the outer circumferential surface of the inner tube 20 and the portion on the outer circumferential surface of the outer tube 19 except for the proximal end portion 19a are continued to each other without substantially steps in the direction of the axial line O.

Moreover, an end surface 20b which is formed between the distal portion 20a of the inner tube 20 and the portion except for the distal portion 20a and faces the proximal side comes into contact with a distal opening edge of the outer tube 19.

Moreover, a seal groove 23 and fluid accommodation grooves 24 are formed on the portion on the outer circumferential surface of the inner tube 20 except for the distal end portion 20a in this order toward the proximal end portion.

The seal groove 23 is positioned closer to the distal end portion 20a than the fluid accommodation groove 24, and is disposed so as to be separated from the fluid accommodation groove 24. The seal groove 23 has annular shape which is recessed from the outer circumferential surface of the inner tube 20 inward in the radial direction and which is formed in the circumferential direction. A seal member 25 such as an annular O ring is disposed in the seal groove 23.

Moreover, the fluid accommodation groove 24 has an annular shape which is recessed from the outer circumferential surface of the inner tube 20 inward in the radial direction and extends in the circumferential direction, and the width of the fluid accommodation groove 24 in the direction of the axial line O is larger than the width of the seal groove 23. In addition, in the shown example, the thickness of a portion on the circumferential wall of the inner tube 20 at which the fluid accommodation groove 24 is positioned is the same as the thickness of a portion of the outer tube 19 which is positioned on the outside in the radial direction of the fluid accommodation groove 24.

In addition, the plurality of fluid accommodation grooves 24 are formed on the outer circumferential surface of the inner tube 20 with intervals therebetween in the direction of the axial line O, and in the example of the present embodiment, two fluid accommodation grooves 24 are formed with intervals therebetween in the direction of the axial line O. In a longitudinal sectional view of FIG. 4, a bottom surface (a surface facing outward in the radial direction) in the fluid accommodation groove 24 linearly expands in the direction of the axial line O, one side surface (wall surface) of the fluid accommodation groove 24 positioned close to the distal end portion of the tool main body 2intends toward the distal end portion of the tool main body 2, and the other side surface of the fluid accommodation groove 24 positioned close to the proximal end portion of the tool main body 2also intends toward the proximal end portion of the tool main body 2.

Moreover, a space (passage), which is formed by the fluid accommodation groove 24 of the inner tube 20 and the portion on the inner circumferential surface of the outer tube 19 facing the accommodation groove 24, is included in the fluid chamber 18. That is, in the present embodiment, the fluid chamber 18 includes annular fluid chamber portions 26 which extend in the circumferential direction in accordance with the shapes of the fluid accommodation grooves 24, and the plurality of annular fluid chamber portions 26 are provided in the inner portion of the circumferential wall of the tube-shaped portion 7 with intervals therebetween in the direction of the axial line O.

The inner portion of the fluid chamber 18 is filled with liquid (fluid) such as oil, and although it is not particularly shown, the fluid chamber 18 includes a pressure transmission path which communicates with the inner portion of the tool main body 2 via at least one of the inner tube 20 and the outer tube 19 from the annular fluid chamber portion 26. The pressure transmission path is a channel which is formed (built in) in the tool main body 2 in a sealing state, one end of the channel of the pressure transmission path communicates with the annular fluid chamber portion 26, and the other end of the channel communicates with a pressure adjustment screw hole opening to the outer surface of the tool main body 2 and is sealed by a pressure adjustment screw (pressure adjustment means) which is screwed to the pressure adjustment screw hole.

In addition, pressure (internal pressure) of the fluid inside the fluid chamber 18 increases or decreases by adjusting a screwing amount of the pressure adjustment screw with respect to the pressure adjustment screw hole.

In the portion on the outer circumferential surface of the inner tube 20 except for the distal portion 20a, a portion except for the seal groove 23 and the fluid accommodation grooves 24 has a constant diameter (inner diameter) in the direction of the axial line O. Specifically, the outer diameter of the portion on the outer circumferential surface of the inner tube 20 except for the distal portion 20a is approximately the same as the inner diameter of the portion on the inner circumferential surface of the outer tube 19 except for the proximal end portion 19b, and the portion on the outer circumferential surface of the inner tube 20 except for the distal portion 20a is fitted toward the proximal side while sliding with (the portion except for the proximal end portion 19b on) the inner circumferential surface of the outer tube 19. Accordingly, the inner tube 20 is fitted to the outer tube 19 in a removable manner. Moreover, in the shown example, a proximal end portion 20c on the outer circumferential surface of the inner tube 20 has a chamfered shape in which the diameter gradually decreases toward the proximal side, and the proximal end portion 20c is positioned inside the proximal end portion 19b of the outer tube 19.

The inner circumferential surface of the inner tube 20 has a constant diameter (inner diameter) in the direction of the axial line O. The inner diameter of the inner tube 20 is approximately the same as the outer diameter of the shank portion 6 of the reamer 3, and the reamer 3 is fitted to the tube-shaped portion 7 in a removable manner by fitting the shank portion 6 toward the proximal side while allowing the outer circumferential surface of the shank portion 6 of the reamer 3 to slide with the inner circumferential surface of the inner tube 20 of the tube-shaped portion 7. In this way, the reamer 3 is detachably fitted to the inside in the radial direction of the tube-shaped portion 7, and in the fitted state, the cutting edge portions 5 of the reamer 3 extend so as to protrude from the tube-shaped portion 7 toward the distal side.

In addition, an inner wall portion and an outer wall portion (a portion of the inner tube 20 corresponding to the annular fluid chamber portion 26 in the direction of the axial line O and a portion of the outer tube 19 corresponding to the annular fluid chamber portion 26 in the direction of the axial line O) positioned on the inside and the outside in the radial direction of the annular fluid chamber portion 26 (fluid chamber 18) on the circumferential wall of the tube-shaped portion 7 can be elastically deformed in the radial direction according to a change in pressure of the fluid inside the annular fluid chamber portion 26. That is, according to the increase in the pressure of the fluid inside the fluid chamber 18, the outer wall portion (outer tube 19) is elastically deformed outward in the radial direction and is pressed to the head portion 9, and the inner wall portion (inner tube 20) is elastically deformed inward in the radial direction and is pressed to the reamer 3.

More specifically, the reamer 3 is fitted to the circumferential wall of the tube-shaped portion 7 from the inside in the radial direction and the head portion 9 is fitted to the circumferential wall from the outside in the radial direction. Accordingly, since the inner wall portion (inner tube 20) of the circumferential wall of the tube-shaped portion 7 is expanded so as to be elastically deformed to the inside in the radial direction, the tube-shaped portion 7 and the reamer 3 are pressed to each other and are fixed to each other so as not to be relatively moved, and since the outer wall portion (outer tube 19) of the circumferential wall of the tube-shaped portion 7 is expanded so as to be elastically deformed to the outside in the radial direction, the tube-shaped portion 7 and the head portion 9 are pressed to each other and are fixed to each other so as not to be relatively moved. In addition, rigidity of the circumferential wall of the tube-shaped portion 7 is set so as to be elastically deformed as described above and is lower than rigidity of each of the reamer 3 and the head portion 9. However, in this way, since the circumferential wall of the tube-shaped portion 7 is interposed between the reamer 3 and the head portion 9, the rigidity of the circumferential wall of the tube-shaped portion 7 substantially increases.

Next, a procedure of mounting the reamer 3 and the head portion 9 on the tool main body 2 of the present embodiment will be described.

In FIGS. 1 and 2, first, the head portion 9 is externally fitted to the tube-shaped portion 7 of the tool main body 2, and the head portion 9 is mounted on the head attachment portion 11 of the tool main body 2 by screwing the attachment screws 16 to the attachment screw holes 17. Moreover, at this time, the attachment screws 16 are temporarily fastened, and the attachment screws 16 may be permanently fastened after the tube-shaped portion 7, the head portion 9, and the reamer 3 described below are aligned, or at this time, the attachment screws 16 may not be permanently fastened.

Next, the reamer 3 is inserted into the tube-shaped portion 7, the proximal end portion of the reamer 3 abuts against an abutment portion (not shown) provided in the tool main body 2 (for example, in the mounting hole 21), or the pressure adjustment screws are screwed (the screwing amount with respect to the pressure adjustment screw hole is increased) in a state where the position of the reamer in the direction of the axial line O is adjusted in accordance with a mark or the like provided on the outer circumferential surface of the reamer 3, and the pressure of the fluid inside the fluid chamber 18 increases.

Accordingly, each of a relative movement between the tube-shaped portion 7 and the head portion 9 and a relative movement between the tube-shaped portion 7 and the reamer 3 is regulated while the tube-shaped portion 7 of the tool main body 2, the head portion 9, and the reamer 3 are aligned in the radial direction so as to be coaxially disposed one another on the axial line O, and the tube-shaped portion 7, the head portion 9, the reamer 3 are firmly fixed as if they are integrated with each other.

After the cutting is performed using the cutting tool 1, in accordance with subsequent machining (rough machining, finishing, or the like) different from the cutting or the shape of the valve seat to be subsequently machined, the head portion 9 and/or the reamer 3 is removed according to a procedure reverse to the above-described procedure and is replaced with another head portion 9 and/or reamer 3.

Moreover, in order to remove the head portion 9 and the reamer 3 from the tool main body 2, by decreasing the pressure of the fluid inside the fluid chamber 18 by loosening the pressure adjustment screws (decreasing the screwing amount with respect to the pressure adjustment screw hole), the circumferential wall of the tube-shaped portion 7 is deformed so as to be restored, and the head portion 9 and the reamer 3 can be removed. In addition, in order to remove the head portion 9, the screwing of the attachment screw 16 with respect to the attachment screw hole 17 may be released (the attachment screw 16 may be removed).

In addition, basically, attachment and detachment operations of the head portion 9 and the reamer 3 with respect to the tube-shaped portion 7 of the above-described tool main body 2 are performed outside the machine tool (outside the machine). However, the present invention is not limited to this, and for example, in a state where the tool main body 2 is mounted on the main spindle of the machine tool, the head portion 9 and the reamer 3 may be attached to or detached from the tube-shaped portion 7 of the tool main body 2.

According to the cutting tool 1 of the above-described present embodiment, the tube-shaped portion 7 is provided on the distal end portion of the tool main body 2, and by increasing the pressure of the liquid (fluid) inside the fluid chamber 18 formed in the inner portion of the circumferential wall of the tube-shaped portion 7 in the state where the reamer (hole machining tool core) 3 is fitted to the inside in the radial direction of the tube-shaped portion 7 and the head portion 9 is fitted to the outside in the radial direction of the tube-shaped portion 7, each of the inner wall portion and the outer wall portion (inner tube 20 and the outer tube 19) positioned on the inside in the radial direction and on the outside in the radial direction of the fluid chamber 18 of the circumferential wall is elastically deformed in the radial direction, and the tube-shaped portion 7, the reamer 3, and the head portion 9 are fixed to each other while being coaxially aligned with each other on the axial line O of the tool main body 2.

Specifically, if a liquid pressure (pressure of the fluid) inside the fluid chamber 18 of the circumferential wall of the tube-shaped portion 7 is increased by the pressure adjustment screw (pressure adjustment means) provided in the tool main body 2, the inner wall portion (inner tube 20 in the present embodiment) positioned on the inside in the radial direction of the fluid chamber 18 of the circumferential wall is deformed so as to be expanded inward in the radial direction, and the inner circumferential surface of the inner wall portion (inner circumferential surface of the inner tube 20) is pressed to the outer circumferential surface of the shank portion 6 of the reamer 3. Accordingly, the reamer 3 is adjusted such that the center axis C of the reamer 3 is accurately coincident with the axial line O of the tool main body 2.

Moreover, the outer wall portion (outer tube 19 in the present embodiment) positioned on the outside in the radial direction of the fluid chamber 18 of the circumferential wall of the tube-shaped portion 7 is deformed so as to be expanded outward in the radial direction, and the outer circumferential surface of the outer wall portion (outer circumferential surface of the outer tube 19) is pressed to the inner circumferential surface of the head portion 9. Accordingly, the head portion 9 is adjusted such that the center axis of the head portion 9 is accurately coincident with the axial line O of the tool main body 2.

In this way, since the tube-shaped portion 7, the reamer 3, and the head portion 9 are pressed to each other in the radial direction and fitted so as to come into close contact with each other, the distal end portion of the tool main body 2 is firmly fixed as if the tube-shaped portion 7, the reamer 3, and the head portion 9 are integrated with each other. Accordingly, for example, even when an external force such as a cutting load is applied to the tool during cutting, sufficient tool rigidity is secured.

Specifically, unlike the present embodiment, for example, in a configuration (a hydro-chuck structure of the related art) in which only the inner wall portion (inner tube 20) positioned on the inside in the radial direction of the circumferential wall of the tube-shaped portion 7 can be elastically deformed inward in the radial direction, there is a concern that the tube-shaped portion 7 may be deformed (the diameter thereof may be increased) outward in the radial direction by a reaction force by which the inner wall portion presses the reamer 3, or a holding force with respect to the reamer 3 may not be sufficiently secured.

Meanwhile, according to the present embodiment, the inner wall portion (inner tube 20) positioned on the inside in the radial direction of the circumferential wall of the tube-shaped portion 7 is elastically deformed inward in the radial direction, the outer wall portion (outer tube 19) positioned on the outside in the radial direction of the circumferential wall is elastically deformed outward in the radial direction, the reamer 3 and the head portion 9 are pressed to each other, and effects which cancel out the reaction forces each other are obtained. Accordingly, it is possible to effectively prevent the deformation of the tube-shaped portion 7, and it is possible to sufficiently secure tool rigidity by securing the holding force with respect to the reamer 3.

That is, in the present embodiment, expansion and deformation of the tube-shaped portion 7 outward in the radial direction is preformed, which is not performed in the hydro-chuck structure of the related art. Accordingly, a gap between the tube-shaped portion 7 and the head portion 9 disposed on the outside in the radial direction of the tube-shaped portion 7 is eliminated, and it is possible to obtain a reliable fastening state with high rigidity as if the distal end portion of the tool main body 2 is integrated.

In addition, since the axial alignment and the fixation among the tube-shaped portion 7, the reamer 3, and the head portion 9 are performed by a simple operation such as increasing the pressure of the fluid in the fluid chamber 18, workability is improved. That is, for example, unlike the present embodiment, in the related art, when the reamer or the head portion is attached to the tube-shaped portion of the tool main body, an adjustment screw which fixes the position of the reamer or the head portion while aligning the reamer or the head portion in the axial direction, or the like is necessary. However, in the present embodiment, the adjustment screw is not required, and workability with respect to the axial alignment and the fixation of the reamer is remarkably improved.

According to the present embodiment, setting of the cutting tool 1 is effectively performed in a short time, man-hours decrease, the workability increases, cutting is performed in high efficiency, and productivity is improved.

In addition, the reamer 3 and the head portion 9 may be removed from the tube-shaped portion 7 of the tool main body 2 by decreasing the pressure of the fluid inside the fluid chamber 18. Accordingly, the inner wall portion (inner tube 20) and the outer wall portion (outer tube 19) which have been elastically deformed as described above are deformed so as to be restored, and it is possible to simply remove the reamer 3 and the head portion 9 from the tube-shaped portion 7.

Moreover, in the present embodiment, according to the simple configuration in which the tube-shaped portion 7 is provided on the distal end portion of the tool main body 2, and the reamer 3 and the head portion 9 are fitted to the tube-shaped portion 7 from the inside and the outside in the radial direction, the above-described excellent effects are obtained.

Hereinbefore, according to the present embodiment, the reamer 3 is detachably mounted on the tool main body 2 using the hydro-chuck structure, and it is possible to sufficiently secure the tool rigidity while increasing an attachment and detachment operability and accuracy of the axial alignment.

In addition, according to the present embodiment, it is possible to cope with any kind of work.

In addition, in the present embodiment, the head portion 9 is detachably mounted on the distal end portion of the tool main body 2, that is, the tool main body 2 and the head portion 9 can be divided into separate units while the rigidity of the distal end portion of the tool main body 2 is sufficiently secured. Accordingly, the following effects are obtained. That is, for example, the plurality of head portions 9 in which the shapes of the cutting edges 4 or diameters of rotation paths of the cutting edges 4 around the axial line O are different from each other can be prepared, and according to the shapes of the opening portions (shapes of the valve seats, diameters of the valve seats, or the like) of various machined holes, or a kind of machining (rough machining, finishing, or the like), the head portions 9 can be selectively exchanged with respect to one set of the tool main body 2 and the reamer 3. Accordingly, it is possible to easily cope with small quantities of various different types of production while decreasing cost of facilities, and when the head portion 9 or the cutting edge 4 is damaged, it is possible to cope with the damage by replacing the head portion 9, and it is possible to reduce costs.

Moreover, in the present embodiment, since the fluid chamber 18 includes the annular fluid chamber portion 26 which extends around the direction of the axial line (in the circumferential direction) between the outer wall portion (outer tube 19) and the inner wall portion (inner tube 20) of the circumferential wall of the tube-shaped portion 7, operations due to the provision of the above-described fluid chamber 18 are obtained over the entire region in the circumferential direction on the inside and the outside in the radial direction of the tube-shaped portion 7, and the tube-shaped portion 7 and the reamer 3, and the tube-shaped portion 7 and the head portion 9 are fixed so as to firmly and reliably come into close contact with each other over the entire region in the circumferential direction.

Moreover, in the present embodiment, since the plurality of annular fluid chamber portions 26 are provided with intervals therebetween in the direction of the axial line O in the circumferential wall of the tube-shaped portion 7, the above-described effects obtained by provision of the annular fluid chamber portions 26 to the fluid chamber 18 are obtained at a plurality of locations with intervals therebetween in the direction of the axial line O in the tube-shaped portion 7, and preferably, reliability increases.

Moreover, in the present embodiment, the circumferential wall of the tube-shaped portion 7 includes the outer tube (outer wall portion) 19 which is integrally formed with the tool main body 2, and the inner tube (inner wall portion) 20 which is liquid-tightly fitted into the outer tube 19, and the fluid chamber 18 is formed between the outer tube 19 and the inner tube 20. Accordingly, it is possible to simply configure the circumferential wall of the tube-shaped portion 7, and it is possible to accurately form the fluid chamber 18 in a desired shape.

In addition, in the present embodiment, even when the hole machining tool core is the reamer 3 for finishing which requires higher accuracy, the axial alignment of the reamer 3 is not particularly required, and it is possible to accurately align the reamer 3 on the axial line O of the tool main body 2 by only chucking (holding and fixing) the reamer 3 into the tube-shaped portion 7.

Moreover, the present invention is not limited to the above-described embodiment, and various modifications may be applied to the present invention within a scope which does not depart from the gist of the present invention.

For example, in the above-described embodiment, the hole machining tool core is the reamer 3. However, the present invention is not limited to this, for example, the hole machining tool core may be a gun drill (drill) in addition to the reamer 3.

In addition, the circumferential wall of the tube-shaped portion 7 has a double tube-shaped structure which separately includes the outer tube (outer wall portion) 19 and the inner tube (inner wall portion) 20. However, the present invention is not limited to this, and for example, the circumferential wall may have a double tube-shaped structure in which the outer tube 19 and the inner tube 20 are integrally formed.

In addition, the case where the fluid chamber 18 includes the plurality of annular fluid chamber portions 26 which extend around the axial line O and are provided with intervals therebetween in the direction of the axial line O is described. However, the prevent invention is not limited to this. That is, for example, the fluid chamber 18 may include a C-shaped fluid chamber portion having a C shape around the axial line O in addition to the annular shape, or may include fluid chamber portion having other shapes. In addition, the number of the annular fluid chamber portions 26 is not limited to two, which is described in the embodiment. That is, the number of the annular fluid chamber portions 26 is three or more or only one.

Moreover, the inner portion of the fluid chamber 18 is filled with liquid (fluid) such as oil. However, since the liquid is any one as long as the inner tube 20 is elastically deformed inward in the radial direction and the outer tube 19 is elastically deformed outward in the radial direction by increasing the pressure thereof, the kind of the fluid which fills the inner portion of the fluid chamber 18 is not limited to the liquid such as oil.

In the above-described embodiment, the case where the cutting inserts 14 having the cutting edges 4 are detachably disposed on the insert attachment seats of the notch portion 13 of the head portion 9 is described. However, the present invention is not limited to this, and for example, the cutting edge portions having the cutting edges 4 may be integrated with the outer circumferential portion of the head portion 9 by brazing or the like so as to be not removed from the outer circumferential portion.

In addition, in the above-described embodiment, one example of the divided tool main body 2 is described, in which the head portion 9 is detachably mounted on the distal end portion of the tool main body 2. However, the present invention is not limited to this. That is, the head portion 9 may be undetachably integrated with the tool main body 2 using welding, bonding, brazing (a case where the entire head portion 9 is formed of sintered hard alloy, or the like), or the like.

In addition, configurations (components) which are described in the above-described embodiment, the modifications, provisions, or the like may be combined with each other within a scope which does not depart from the gist of the present invention, and addition, omission, replacement, and other modifications of configurations may be applied. In addition, the present invention is not limited by the above-described embodiment, and is limited by only Claims.

### Industrial Applicability

According to a cutting tool of the present invention, a tube-shaped portion is provided on a distal portion of a tool main body, and by increasing pressure of liquid (fluid) inside a fluid chamber formed in the inner portion of a circumferential wall of the tube-shaped portion in a state where a hole machining tool core is fitted to an inside in a radial direction of the tube-shaped portion and a head portion is fitted to an outside in the radial direction of the tube-shaped portion, each of an inner wall portion and an outer wall portion positioned on the inside in the radial direction and on the outside in the radial direction of the fluid chamber of the circumferential wall is elastically deformed in the radial direction, and the tube-shaped portion, the hole machining tool core, and the head portion are fixed to each other while being coaxially aligned with each other on an axial line of the tool main body.

Accordingly, the present invention has industrial applicability.

### Reference Signs List

1: CUTTING TOOL
2: TOOL MAIN BODY
3: REAMER (HOLE MACHINING TOOL CORE)
4: CUTTING EDGE
7: TUBE-SHAPED PORTION
9: HEAD PORTION
18: FLUID CHAMBER
19: OUTER TUBE (OUTER WALL PORTION)
20: INNER TUBE (INNER WALL PORTION)
26: ANNULAR FLUID CHAMBER PORTION (FLUID CHAMBER)
O: AXIAL LINE

## Claims

1. A cutting tool, comprising:
a tool main body having a tube-shaped portion formed on a distal end portion of the tool main body so as to extend in a direction of an axial line of the tool main body, and which is capable of being rotated around the axial line;
a hole machining tool core which has a shaft shape, which is detachably fitted to an inside of the tube-shaped portion, and which extends so as to protrude from the tube-shaped portion ahead of a distal end thereof; and
a head portion which has a tube shape, which is fitted to an outside of the tube-shaped portion, and in which a cutting edge is provided on an outer circumferential portion of the head portion,
wherein a circumferential wall of the tube-shaped portion includes:
an outer wall portion;
an inner wall portion; and
a fluid chamber which is formed in the circumferential wall between the outer wall portion and the inner wall portion, a fluid being filled in the fluid chamber, and wherein
while increasing a pressure of the fluid in the fluid chamber, the outer wall portion is elastically deformed outward in a radial direction of the circumferential wall and thereby being pressed to the head portion, and the inner wall portion is elastically deformed inward in the radial direction of the circumferential wall and thereby being pressed to the hole machining tool core.

2. The cutting tool according to claim 1,
wherein the head portion is detachably mounted on the distal end portion of the tool main body.

3. The cutting tool according to claim 1 or 2,
wherein the fluid chamber includes an annular fluid chamber portion which is formed in the tube-shaped portion so as to be annularly arranged in a circumferential direction of the tube-shaped portion.

4. The cutting tool according to claim 3,
wherein a plurality of the annular fluid chamber portions are formed in the tube-shaped portion so as to be positioned at intervals each other in the direction of the axial line.

5. The cutting tool according to any one of claims 1 to 4,
wherein the inner wall portion is detachably fitted inside the outer wall portion,
a seal groove is formed in the inner wall portion so as to be close to a distal end of the inner wall portion with respect to the fluid chamber, and
a seal member is disposed inside the seal groove.
